# EUROPEAN PATENT SPECIFICATION

(11) **EP 4 299 399 B1**
(45) Date of publication and mention of the grant of the patent: **29.01.2025**
(21) Application number: 22181209.2
(22) Date of filing: 27.06.2022
(51) Int. Cl.: B60W 60/00, B60W 50/14

(54) **METHOD FOR TRANSITIONING CONTROL OF A VEHICLE, DATA PROCESSING APPARATUS AND AUTONOMOUS DRIVING SYSTEM**
VERFAHREN ZUR ÜBERGABE DER KONTROLLE EINES FAHRZEUGS, DATENVERARBEITUNGSVORRICHTUNG UND AUTONOMES FAHRSYSTEM
PROCÉDÉ DE TRANSITION DU CONTRÔLE D'UN VÉHICULE, APPAREIL DE TRAITEMENT DE DONNÉES ET SYSTÈME DE CONDUITE AUTONOME

(43) Date of publication of application: 03.01.2024
(73) Proprietor: Volvo Car Corporation, 40531 Göteborg (SE)
(72) Inventor: WICKMAN, Casper, 40531 Göteborg (SE); AUSINSCH, Fredrik, 40531 Göteborg (SE); BROSTRÖM, Robert, 40531 Göteborg (SE); YUAN, Lingxi, 40531 Göteborg (SE)
(74) Representative: Maiwald GmbH

(56) References cited:
- EP-A1- 2 848 488
- EP-A1- 3 378 722
- EP-A1- 3 730 375
- US-A1- 2016 214 618
- US-A1- 2018 093 675

## Description

The present invention is directed to a method for transitioning control of a vehicle from an autonomous driving system to a human driver.

Moreover, the present invention relates to a data processing apparatus.

Furthermore, the present invention is directed to an autonomous driving system.

Vehicles providing autonomous driving functionalities are known. In such vehicles, tasks such as longitudinal guiding and lateral guiding of the vehicle may be performed by an autonomous driving system, i.e. without the interaction of a human driver. In other words, the autonomous driving system is responsible for steering the vehicle, accelerating and braking.

Some vehicles having autonomous driving functionalities require that upon request of the autonomous driving system, the human driver rapidly takes over the control of the vehicle. This may be the case for vehicles offering autonomous driving functionalities according to Level 3 as defined by the Society of Automotive Engineers (SAE). In an illustrative example, the vehicle approaches a construction area and the autonomous driving system detects that it will not be able to further guide the vehicle, e.g. due to the absence of road markings. Consequently, the human driver is requested to take over control of the vehicle.

It is obvious that for the safety of all traffic participants, the transitioning of the control from the autonomous driving system to the human driver needs to happen in a smooth, calm and timely manner.

In this context, EP 3 378 722 A1 shows a drive assistance device and a drive assistance method which comprises applying a plurality of notification timings to notify switching from an automatic driving mode to a manual driving mode.

Moreover, EP 3 730 375 A1 discloses a method and system for analyzing the control of a vehicle comprising an autonomous driving unit. In this context, a change in the driving mode from autonomous driving to manual driving is detected, and at least one driving parameter before and/or after detecting the change is monitored. Based on driving values obtained by the monitoring with respect to the detected change in driving mode, at least one driving quantity quantifying the quality of interplay between the autonomous driving unit and a human driver is determined.

It is an objective of the present invention to further improve the transition of control of a vehicle from an autonomous driving system to a human driver.

The problem is at least partially solved or alleviated by the subject matter of the independent claims of the present invention, wherein further examples are incorporated in the dependent claims.

According to a first aspect, there is provided a method for transitioning control of a vehicle from an autonomous driving system to a human driver, comprising
- determining a notification procedure for prompting a human driver of the vehicle to take over control according to a method for determining a notification procedure for prompting a human driver of a vehicle to take over control from an autonomous driving system of the vehicle, and
- triggering the execution of the determined notification procedure.

The method for determining a notification procedure for prompting a human driver of a vehicle to take over control from an autonomous driving system of the vehicle comprises the following steps. The notification procedure is at least defined by a notification starting time and a first notification type.
- receiving a take-over request and an associated take-over time information,
- determining a driver attribute describing the human driver, and
- determining a notification starting time and a first notification type depending on the driver attribute.

In this context, a take-over request is to be understood as a message or a signal delivered by a component of an autonomous driving system. The message or signal carries the information that the human driver needs to take over the control of the vehicle. The message or signal may also comprise a time attribute, i.e. an information when the take-over by the human driver needs to be completed. This may be referred to as a take-over time information. The time attribute may be a time span or a clock time. It is noted that the present method may be carried out by a component of the autonomous driving system or a system separate therefrom.

Thus, the driver is prompted to take over control in accordance with a notification procedure which respects a driver attribute. As has already been mentioned before, the driver attribute comprises an information relating to a permanent or temporary characteristic of a current driver. Thus, the notification starting time and the first notification may be determined as a function of the driver attribute. This has the effect, that the triggered notification procedure may be different for different drivers. More precisely, the notification procedure is adapted to the current driver. This leads to a smooth, calm and timely transition of the control from the autonomous driving system to the human driver. Overall road safety is improved.

According to the invention, the method further comprises assessing the quality of the take-over procedure. Assessing the quality of a take-over procedure comprises comparing a driving behavior before the start of an autonomous driving mode and after the end of the autonomous driving mode, i.e. when the human driver has taken over control from the autonomous driving system. In a case in which the performance is substantially equal, the take-over procedure may be considered to be good. If the driving performance is lower after the take-over than it was before the start of the autonomous driving mode, one can determine that the take-over procedure was not good. In such a case, the notification time may need to be extended.

In the present invention, the autonomous driving system is a system which is configured to perform the longitudinal guiding and the lateral guiding of the vehicle. In other words, the autonomous driving system is configured to steer the vehicle, accelerate the vehicle and decelerate the vehicle without the interaction of a human driver. Another term of lateral guiding is transversal guiding. Only vehicles having an autonomous driving system are able to deliver a take-over request.

It is noted that the take-over request may relate to a planned take-over or an unplanned take-over.

The driver attribute comprises an information relating to a temporary or permanent characteristic of a current driver. Thus, by determining the notification starting time and the first notification type depending on the driver attribute, the notification procedure is determined as a function of the driver attribute, i.e. at least one driver characteristic is respected when determining the notification procedure. This has the effect, that the notification procedure may be different for different drivers. More precisely, the notification procedure is adapted to the current driver. This leads to a smooth, calm and timely transition of the control from the autonomous driving system to the human driver. Overall road safety is improved.

A further effect of the method according to the present invention is that the human driver can use an autonomous driving mode for a comparatively long time. This is illustrated by explaining the method according to the present invention in contrast to a notification procedure which uses a fixed notification starting time and a fixed notification type, i.e. neither the notification starting time nor the notification type are dependent on the driver attribute. In such a case, the notification time may be too long for the current driver. This has the consequence that the driver is ready to take over control before it is actually necessary or planned. This may be the case, if the driver has been sitting in an upright position and listening to music while using the autonomous driving mode. This has a negative effect on the smoothness of the take-over. Furthermore, such a situation has a negative effect on the driving experience and the trust, the driver puts into the autonomous driving system. The notification time may also be too short for the driver. This may be the case if the driver has put the seat in a reclined position and has been resting while using the autonomous driving mode. If the notification time is too short, the driver is stressed when taking over control. This also has a negative effect on the smoothness and safety of the take-over. Also the fixed notification type may be inappropriate depending on the activity or state of the driver, e.g. a visual notification cannot be seen when the driver occasionally closes his or her eyes while resting. An audible notification may be overheard if the driver is watching a movie while using the autonomous driving mode. The method according to the present invention solves all of these problems.

In an example, the notification time is one to ten minutes.

In an example, the first notification type is a selection out of at least two available notification types.

In an example, the notification starting time may be a time window or a clock time.

In an example, the method may further comprise triggering at least one of a steering wheel and a driver seat to move into a driving position. This of course only applies if the steering wheel and/or the driver seat is in a position which is not suitable as a driving position. For example, the position of the steering wheel and/or the driver seat can be recorded before the autonomous driving mode is started. If in a situation in which the driver needs to take over control of the vehicle, the position of the steering wheel and/or the driver seat differs from the respective stored positions, they are moved back to these stored positions. Consequently, when taking over control, the steering wheel and/or the driver seat is in a position suitable for reliably controlling the vehicle.

In an example, the method may further comprise saving input data, determination results and output data in a history storage unit. In other words, detection results of at least one driver monitoring sensor, a driver state derived therefrom and a driver activity derived therefrom may be stored. This stored data is useful for improving the accuracy and appropriateness of a determined notification procedure.

According to an example, the method may further comprise determining at least one of a notification intensity, a second notification type, and a notification escalation scheme depending on the driver attribute. The notification procedure is further defined by at least one of the notification intensity, the second notification type, and the notification escalation scheme. Determining the notification intensity depending on the driver attribute makes sure that the driver reliably notices the notification. Alternatively or additionally thereto, using a second notification type further enhances the probability that the driver notices the notification in time. A notification escalation scheme is used if the human driver does not react to the notification in the expected manner. The escalation scheme may for example comprises increasing the intensity of the notification and/or add a notifications of a different type. Altogether, a reliable notification is guaranteed.

In an example, the first notification type and/or the second notification type comprise at least one of an audio notification, a visual notification and a haptic notification. An audio notification is a notification that is audible by the human driver. Such a notification can be delivered by a loudspeaker being arranged in the vehicle. A visual notification is a notification that can be seen by the human driver. Such a notification can be delivered by a screen or a lighting system in the interior of the vehicle. A haptic notification is a notification that can be felt by the human driver, e.g. by his or her sense of touch. Examples of haptic notifications include inducing a vibration in a part of the vehicle contacting the human driver, e.g. a driver seat, pulling of a seat belt, automatically changing a position of the driver seat, or suddenly changing a temperature of an air flow of an air conditioning system. All of these notification types may be easily and reliably noticed by the human driver.

In an example, determining a driver attribute may comprise analyzing at least one detection result of at least one driver monitoring sensor and deriving a corresponding driver state. The driver attribute may be determined based on the driver state. This includes two alternatives. Either the driver attribute is the driver state or the driver state is used to determine driver attribute. Using the at least one driver monitoring sensor, a driver state can be reliably determined. Moreover, changes in the driver state may be detected instantly or with a short time delay. Thus, the driver attribute may be determined in a timely and reliable manner.

In an example, the at least one driver monitoring sensor comprises at least one of an interior camera, an interior radar, an eye tracking system, a hand tracking system, a position sensor of a component of the driver seat, a position sensor being connected to the steering wheel, a detector for a volume level of an entertainment system, a detector for a selected interior illumination mode, a detector relating to a content displayed on a screen in the interior of the vehicle, and a driver pulse sensor. Alternatively or additionally, the driver monitoring sensor comprises means for detecting other occupants in the car, e.g. using the interior camera as has been mentioned above or using sensors in the co-driver seat and/or the passenger seats. Alternatively or additionally, the driver monitoring sensor may comprise or use a driver profile. Such a driver profile may comprise further information describing the driver. The driver profile may for example comprise an information, whether the driver wears glasses or whether the driver is hearing-impaired.

Using the at least one driver monitoring sensor, at least one of the following driver states may be determined: the driver is looking at the road, the driver has closed eyes, the driver's eyes are open, the driver occasionally closes his or her eyes, the driver is occupied with both hands, the driver is occupied with one hand, the driver has both hands free, the driver is moving, the driver is not moving, the driver's pulse is low, the driver's pulse is normal, the driver's pulse is high, the seat position is normal, the seat position is inclined. In a case in which the interior camera comprises an object recognition system or is connected to an object recognition system, it is also possible to define a moving state of each part of the driver's body, e.g. the head, the torso or the arms. Moreover, using an object recognition system, specific objects may be recognized, such as a laptop computer, a mobile phone, a book or a cup. Corresponding driver states can be derived, e.g. the driver uses a laptop computer, the driver uses a mobile phone, the driver uses a book and the driver uses a cup.

In an example, the notification procedure is also determined depending on an exterior state of the vehicle. The exterior state may be determined using at least one exterior sensor. Such a sensor may be at least one of an exterior camera, an exterior radar or an exterior lidar. Knowing the exterior state, improves the quality and accuracy of the notification procedure. For example, in a situation of dense traffic, the notification time can be increased.

In an example, analyzing at least one detection result of at least one driver monitoring sensor comprises applying a machine learning technique. In doing so, driver states can be quickly and reliably derived from a plurality of driver monitoring sensors. The machine learning technique may use training data. The training data may be generated by a plurality of drivers assuming known states within a vehicle and by recording the corresponding detection results of the at least one driver monitoring sensor being installed in the vehicle. When applying the machine learning technique, a current detection result may be compared to the training data in order to derive a corresponding driver state. Of course, it is also possible to directly attribute driver states to specific intervals of a detection result.

In an example, applying a machine learning technique may comprise applying an artificial neural network.

In an example, determining the driver attribute comprises aggregating a plurality of driver states and generating a driver activity information. The driver attribute is determined based on the driver activity information. This means that the driver attribute is not only determined based on one driver state but is able to respect a more complex driver activity information which may incorporate a plurality of driver states. This leads to the determination of an appropriate notification procedure.

For example, the driver activity information may relate to at least one of the following driver activities. It is noted that, of course, the number of driver activities is not limited to this list and the activities provided in the list may alternatively be defined using more or less or different driver states.
- The driver is eating: This activity may be determined if the driver is moving, the driver seat position is normal, the driver's eyes are open, and both hands are occupied.
- The driver is working: This activity may be determined if the driver is generally not moving, the seat position is normal, the driver's eyes are open, and both hands are free. Optionally, this activity may be detected if a working object such as laptop computer is recognized.
- The driver is reading: This activity may be determined if the driver is generally not moving or if only the driver's head is moving, the seat is in a normal position, the driver's eyes are open, and both hands are occupied or one hand is occupied. Optionally, a book may be recognized in front of the driver.
- The driver is on a call: This activity may be determined if the driver is generally not moving, the seat position is normal, the driver's eyes are open, and one hand is occupied. Optionally, a mobile phone may be recognized in proximity to the driver's head.
- The driver is watching a movie: This activity may be determined if a display is providing a video stream, the driver is not moving, the seat position is reclined, both hands are free, and the eyes are open. Optionally, the eyes may be directed towards the display.
- The driver is sleeping: This activity may be determined if the driver's eyes are closed, the seat position is reclined, the hands are free, the driver is not moving, and the pulse is low.
- The driver is resting: This activity may be determined if the driver is not moving, the driver's eyes are occasionally closed, the pulse low, the seat is reclined, and both hands are free.

In an example, the first notification may be a visual notification on a screen or display in the interior of the vehicle, if the driver is watching a movie or if the driver is eating.

In another example, the first notification may be a haptic notification, if the driver is resting, if the driver is sleeping or if the driver is on a call.

In a further example, the first notification may be an audio notification, if the driver is reading or if the driver is working.

In another example, a rather long notification time may be used if the driver is resting or if the driver is sleeping or if the driver is watching a movie or if the driver is on a call. A rather short notification time may be used if the driver is reading or if the driver is working. A medium notification time may be used if the driver is eating.

In an example, aggregating a plurality of driver states and generating a driver activity information comprises applying a machine learning technique. In doing so, the driver activity information can be quickly and reliably derived from a plurality of driver states. The machine learning technique may use training data. The training data may be generated by a plurality of drivers performing known driver activities within a vehicle and by recording the corresponding detection results of the at least one driver monitoring sensor being installed in the vehicle and the corresponding driver states. When applying the machine learning technique, a current detection result may be compared to the training data in order to derive a corresponding driver activity information.

In an example, applying a machine learning technique may comprise applying an artificial neural network.

In an example, determining the driver attribute comprises receiving a reactivity classification information being attributed to the driver. The driver attribute is determined based on the reactivity classification information. The reactivity classification information may be a function of the driver state and/or the driver activity information. The reactivity classification information is a measure how quickly the driver reacts to a notification. In other words, the reactivity classification information describes a capability of the driver. This may be different for different drivers. Consequently, the appropriateness of the notification procedure is enhanced by respecting the reactivity classification information.

In an example, respecting the reactivity classification information has the effect that the notification time is neither too short nor too long for the specific driver. This means that drivers being highly reactive will be notified later than drivers having a rather low reactivity. The reactivity may of course be dependent on a current driver state or a current driver activity. This is reflected in the reactivity classification information.

In an example, determining the driver attribute may comprise analyzing historic driver behavior data and deducting a reactivity classification information being attributed to the driver. The driver attribute is determined based on the reactivity classification information. As before, the reactivity classification information may be provided as a function of a driver state and/or a driver activity. In one example, the reactivity classification information may comprise average reactions times for the driver to take over control as a function of a driver state and/or a driver activity. The average reaction times may be derived from historic reaction times. These may be stored on and made available by a history storage unit. However, a historic reaction time may only be included in the average if a driving performance after the take-over of the human driver is the same as before starting the autonomous driving mode. If a driving performance of the human driver is different after the take-over as compared to before the start of the autonomous driving mode, this may be a hint that the driver did not have enough time for the take-over. Moreover, using an eye tracking system, a time for opening the eyes can be determined. Historic times for opening the driver's eyes may be aggregated to an average time for opening the eyes. For driver states or driver activities in which the driver's eyes are closed, the average time for opening the eyes may be respected. In another alternative, the reactivity classification information may comprise standard values, e.g. for a number of driver states or driver activities, which may be derived from reacting times of a plurality of drivers or from a driver model. Of course, there may also be a possibility for the driver to manually change the reactivity classification information. For example, the driver may manually increase the reaction time for the driver activity of working. This may be helpful if the driver has experienced stress or time pressure when needing to stop working before being able to take over control from the autonomous driving system.

The method for determining a notification procedure for prompting a human driver of a vehicle to take over control from an autonomous driving system of the vehicle may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

Also the method for transitioning control of a vehicle from an autonomous driving system to a human driver may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the methods according to the present invention. This means that there can be one data processing apparatus comprising means for carrying out the method for determining a notification procedure for prompting a human driver of a vehicle to take over control from an autonomous driving system and a separate data processing apparatus comprising means for carrying out the remaining steps of the method for transitioning control of a vehicle from an autonomous driving system to a human driver. Alternatively, one single data processing apparatus may comprise means for carrying out both methods. Using such a data processing apparatus, a driver attribute comprising an information relating to a permanent or temporary characteristic of the current driver may be respected when determining the notification procedure. Thus, the notification starting time and the first notification type may be determined depending on the driver attribute. This has the effect, that the notification procedure may be different for different drivers. More precisely, the notification procedure is adapted to the current driver. This leads to a smooth, calm and timely transition of the control from the autonomous driving system to the human driver. Overall road safety is improved.

In an example, the data processing apparatus may comprise at least one of the following components:
- A detection result evaluation unit: The detection result evaluation unit is configured to analyze at least one detection result of at least one driver monitoring sensor e.g. by applying a machine learning technique as has been explained before. The detection result evaluation unit may be configured to determine a driver state.
- An activity information generation unit: The activity information generation unit may be configured to aggregate a plurality of driver states and to generate a driver activity information based thereon.
- A driver classification unit: The driver classification unit may be configured to store and provide a driver reactivity classification information.
- A take-over assessment unit: The take-over assessment unit may be configured to evaluate a take-over procedure and determine if the procedure was good or not good.
- A first communication interface: The first communication interface may be configured to receive a take-over request and an associated take-over time information.
- A second communication interface: The second communication interface may be configured to receive at least one detection result from at least one driver monitoring sensor.
- A third communication interface: The third communication interface may be configured to provide at least a notification time and a first notification type to a system executing the notification procedure.

According to a third aspect, there is provided an autonomous driving system comprising a data processing apparatus according to the present invention. Using such an autonomous driving system, a driver attribute may be respected when determining and executing the notification procedure. This has the effect, that the notification procedure may be different for different drivers. More precisely, the notification procedure is adapted to the current driver. This leads to a smooth, calm and timely transition of the control from the autonomous driving system to the human driver. Overall road safety is improved.

According to a further aspect, there is also provided a computer program comprising instructions which, when the program is executed by a computer, cause the computer to carry out at least one of the methods according to the present invention. This means that there can be one computer program comprising instructions which cause the computer to carry out the method for determining a notification procedure for prompting a human driver of a vehicle to take over control from an autonomous driving system and a separate computer program comprising instructions which cause the computer to carry out the remaining steps of the method for transitioning control of a vehicle from an autonomous driving system to a human driver. Alternatively, one single computer program may comprise instructions causing the computer to carry out both methods. Using such computer programs, a driver attribute comprising an information relating to a permanent or temporary characteristic of the current driver may be respected when determining the notification procedure and/or when executing the determined notification procedure. Thus, the notification starting time and the first notification type may be determined depending on the driver attribute. The notification procedure is, thus, adapted to the current driver. This leads to a smooth, calm and timely transition of the control from the autonomous driving system to the human driver. Overall road safety is improved.

According to a further aspect, there is also provided a computer-readable storage medium comprising instructions which, when executed by a computer, cause the computer to carry out at least one of the methods according to the present invention. This means that there can be one computer-readable storage medium comprising instructions which cause the computer to carry out the method for determining a notification procedure for prompting a human driver of a vehicle to take over control from an autonomous driving system and a separate computer-readable storage medium comprising instructions which cause the computer to carry out the remaining steps of the method for transitioning control of a vehicle from an autonomous driving system to a human driver. Alternatively, one single computer-readable storage medium may comprise instructions causing the computer to carry out both methods. Using such computer-readable storage media, a driver attribute comprising an information relating to a permanent or temporary characteristic of the current driver may be respected when determining the notification procedure and/or when executing the determined notification procedure. Thus, the notification starting time and the first notification type may be determined depending on the driver attribute. The notification procedure is, thus, adapted to the current driver. This leads to a smooth, calm and timely transition of the control from the autonomous driving system to the human driver. Overall road safety is improved.

It should be noted that the above examples may be combined with each other irrespective of the aspect involved.

These and other aspects of the present invention will become apparent from and elucidated with reference to the examples described hereinafter.

Examples of the invention will be described in the following with reference to the following drawings.

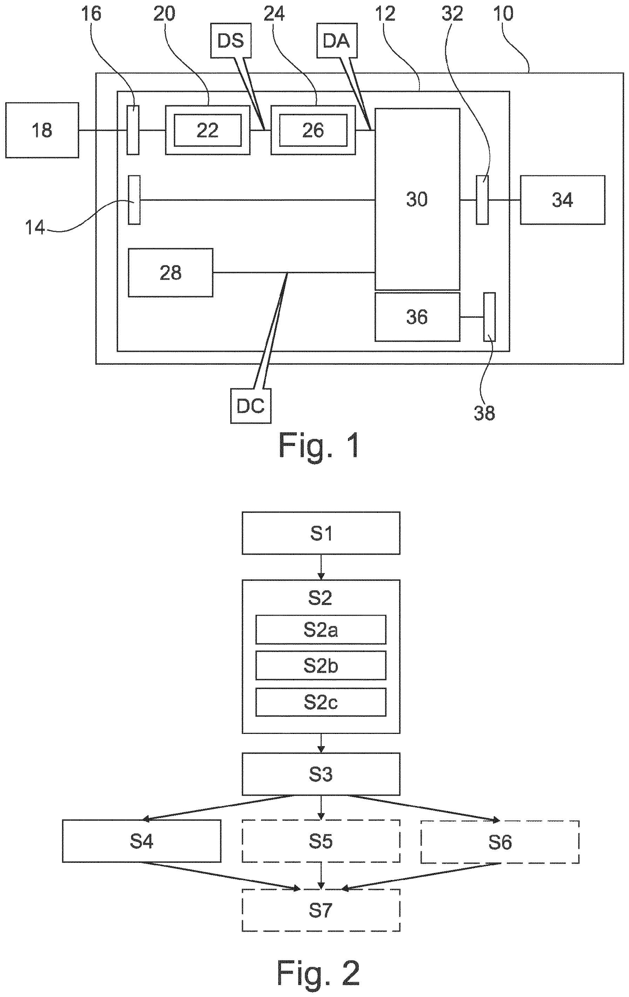

- Figure 1: shows an autonomous driving system according to the present invention comprising a data processing apparatus according to the present invention, wherein the data processing apparatus is configured to carry out a method for determining a notification procedure for prompting a human driver of a vehicle to take over control from an autonomous driving system of the vehicle according to the present invention, and to carry out a method for transitioning control of a vehicle from an autonomous driving system to a human driver according to the present invention, and
- Figure 2: illustrates a method for transitioning control of a vehicle from an autonomous driving system to a human driver and a method for determining a notification procedure for prompting a human driver of a vehicle to take over control from an autonomous driving system of the vehicle.

The figures are merely schematic representations and serve only to illustrate examples of the invention. Identical or equivalent elements are in principle provided with the same reference signs.

Figure 1 shows an autonomous driving system 10. The autonomous driving system may be installed in a vehicle.

The autonomous driving system 10 comprises a data processing apparatus 12.

The data processing apparatus 12 comprises means for carrying out a method for transitioning control of the vehicle from the autonomous driving system 10 to a human driver and a method for determining a notification procedure for prompting the human driver of the vehicle to take over control from the autonomous driving system 10 of the vehicle.

In more detail, the data processing apparatus 12 comprises a first communication interface 14 which is configured to receive a take-over request and an associated take-over time information. In other words, the first communication interface 14 is configured to receive an information that the human driver needs to take over control of the vehicle from the autonomous driving system 10. Additionally, the first communication interface 14 is configured to receive an information when the take-over of control needs to be completed.

The data processing apparatus 12 also comprises a second communication interface 16. The second communication interface 16 is configured to receive at least one detection result from at least one driver monitoring sensor 18.

In the present example, the driver monitoring sensor 18 is communicatively connected to the data processing apparatus 12.

In the Figures, the driver monitoring sensor 18 is to be understood as a generic representation of any one or any combination of an interior camera, an interior radar, an eye tracking system, a hand tracking system, a position sensor of a component of the driver seat, a position sensor being connected to the steering wheel, a detector for a volume level of an entertainment system, a detector for a selected interior illumination mode, a detector relating to a content displayed on a screen in the interior of the vehicle, and a driver pulse sensor.

The data processing apparatus 12 additionally comprises a detection result evaluation unit 20. The detection result evaluation unit is configured to analyze all detection results being received at the second communication interface 16 and derive a driver state DS therefrom.

In order to do so, the detection result evaluation unit 20 may comprise a machine learning unit 22.

In an example, in which the driver monitoring sensor 18 comprises an eye tracking system, the following driver states DS may be determined: the driver is looking at the road, the driver has closed eyes, the driver's eyes are open or the driver occasionally closes his or her eyes.

In an example, in which the driver monitoring sensor 18 comprises an interior camera and/or a hand tracking system, the following driver states DS may be determined: the driver is occupied with both hands, the driver is occupied with one hand or the driver has both hands free.

In an example, in which the driver monitoring sensor 18 comprises a position sensor of a component of the driver seat, the following driver states DS may be determined: the seat position is normal or the seat positing is inclined.

It is understood that these driver states DS are just examples and depending on the type of driver monitoring sensors 18, also additional or other driver states DS may be determined using the detection result evaluation unit 20.

The data processing apparatus 12 additionally comprises an activity information generation unit 24. The activity information generation unit 24 is communicatively connected to the detection result evaluation unit 20. Moreover, the activity information generation unit 24 is configured to aggregate a plurality of driver states DS and to generate a driver activity information DA based thereon.

Using the activity information generation unit 24, the driver activity information DA "the driver is eating" may be determined. This may be the case if the driver seat position is normal, the driver's eyes are open, and both hands are occupied.

Alternatively, using the activity information generation unit 24, the driver activity information DA "the driver is working" may be determined. This may be the case if the seat position is normal, the driver's eyes are open, and both hands are free. Optionally, using the interior camera, a working object such as laptop computer or a wireless keyboard may be recognized.

Alternatively, using the activity information generation unit 24, the driver activity information DA "the driver is sleeping" may be determined. This may be the case if the driver's eyes are closed, the seat position is reclined, and the hands are free.

In order to perform these tasks, the activity information generation unit 24 may comprise a machine learning unit 26.

Moreover, the data processing apparatus 12 comprises a driver classification unit 28. The driver classification unit 28 is configured to store and provide a driver reactivity classification information DC. This means that on the driver classification unit 28, information is stored on how fast the driver has taken over control of the vehicle from the autonomous driving system 10. This information is provided as a function of historic driver activity information.

In this context, the driver classification unit 28 may comprise or may be communicatively connected to a history storage unit.

It is noted that even though the driver classification unit 28 is represented as a part of the data processing apparatus 12 within the vehicle, the driver classification unit 28 can as well be provided as a cloud service being communicatively connected to the data processing apparatus 12. This has the advantage that the driver classification unit 28 can interact with autonomous driving systems 10 of different vehicles.

The data processing apparatus 12 also comprises a notification procedure generation unit 30. The notification procedure generation unit 30 is communicatively connected to the driver classification unit 28, to the activity information generation unit 24 and to the first communication interface 14. The notification procedure generation unit 30 is configured to generate a notification procedure which is at least defined by a notification time and a first notification type. This means that the notification procedure generation unit 30 uses all the information being provided by the driver classification unit 28, the activity information generation unit 24 and the first communication interface 14 in order to determine an appropriate notification time and an appropriate first notification type. In doing so, the current driver activity DA is taken into account. The same applies to the capabilities of the driver, i.e. the driver reactivity classification information DC.

The notification procedure generation unit 30 is communicatively connected to a third communication interface 32 which also forms part of the data processing apparatus 12.

The third communication interface 32 is configured to provide at least the notification time and the first notification type to a notification system 34. The notification system 34 may comprise a notification actuator being configured to generate the notification.

The notification system 34 may be configured to provide at least one of a visual notification, an audio notification or a haptic notification.

The data processing apparatus 12 also comprises a take-over assessment unit 36 which is communicatively connected to a fourth communication interface 38. The take-over assessment unit 36 is configured to evaluate a take-over procedure and determine if the procedure was good or not good. To this end, information describing the driving performance of the human driver is received at the fourth communication interface 38. This information may for example relate to the variability of the steering angle in a time interval shortly after the take-over.

As has been mentioned before, the data processing apparatus 12 is configured to carry out a method for transitioning control of a vehicle from the autonomous driving system 10 to a human driver.

In a first sequence of steps, this method comprises executing the method for determining a notification procedure for prompting the human driver of the vehicle to take over control from the autonomous driving system 10.

In a first step S1 of the method for determining a notification procedure for prompting a human driver of a vehicle to take over control from an autonomous driving system of the vehicle, a take-over request and an associated take-over time information is received at the first communication interface 14.

Thereafter, in a second step S2, a driver attribute is determined.

The driver attribute describes a temporary or permanent characteristic of the human driver.

In the present example, determining the driver attribute comprises analyzing at least one detection result of at least one driver monitoring sensor 18 and deriving a corresponding driver state DS in a step S2a. This is done using the detection result evaluation unit 20. The result of step S2a is the driver state DS. As has been explained before, a machine learning technique is applied in order to determine the driver state DS.

Moreover, determining the driver attribute comprises aggregating a plurality of driver states DS and generating a driver activity information in a step S2b. The result of step S2b is the driver activity information DA. Also in order to determine the driver activity information DA, a machine learning technique is applied.

Moreover, determining the driver attribute comprises receiving a reactivity classification information DC being attributed to the driver in a step S2c. This information is received from the driver classification unit 28. The reactivity classification information DC may be obtained by analyzing historic driver behavior data and deducting the reactivity classification information DC therefrom.

Based on the take-over request and the associated take-over time information and the driver attribute, i.e. the driver activity information DA and the reactivity classification information DC, the notification procedure is determined in a step S3.

Since the notification procedure is defined by at least a notification starting time and a first notification type, at least the notification starting time and the first notification type are determined.

Optionally, also a notification intensity, a second notification type, and a notification escalation scheme may be determined in step S3.

In this context, the first notification type and/or the second notification type comprise at least one of an audio notification, a visual notification and a haptic notification.

Once the notification procedure is determined, the execution of the determined notification procedure is triggered in a step S4.

In an optional fifth step S5, which may be executed in parallel to step S4, a steering wheel and/or a driver seat is triggered to move into a driving position. This is of course only necessary, if the steering wheel and/or the driver seat have been moved out of a driving position. This may be assessed by comparing the position of the steering wheel and/or the driver seat before an autonomous driving mode was started to a corresponding current position.

In an optional step S6, which may also be executed in parallel to step S4, all input data, i.e. the data relating to the take-over request and the take-over time, and the determination results, especially the determined notification procedure and the output data used for triggering the procedure may be saved in a history storage unit.

Moreover, in step S7, the quality of the take-over procedure is assessed using the take-over assessment unit 36.

The method for determining a notification procedure for prompting a human driver of a vehicle to take over control from an autonomous driving system of the vehicle may be applied in a first use case.

In this use case, the driver monitoring sensor 18 may comprise a position sensor of a component of the driver seat. Using a detection result of this sensor, the detection result evaluation unit 20 determines the driver state DS "seat position normal".

Moreover, the driver monitoring sensor 18 may comprise an eye tracking system. Using the detection result of the eye tracking system, the detection result evaluation unit 20 determines the driver state DS "eyes open".

Furthermore, the driver monitoring sensor 18 may comprise a hand tracking system. Using the detection result of the hand tracking system, the detection result evaluation unit 20 determines the driver state DS "both hands occupied".

Based on these three driver states, the activity information generation unit may determine the activity DA "driver is eating".

Moreover, using the driver classification unit 28, it may be found that a standard time for taking over control from the activity of eating is 1,5 minutes. However, for the current human driver the historic data may show that his personal average time for taking over control from the activity of eating is 1 minute.

Consequently, using the notification procedure generation unit 30, a notification time of 1 minute may be determined. Since the direction of gaze of the driver is not clear and a haptic notification has the potential to cause spilling of food in the interior of the vehicle, the first notification type is determined to be "audio notification".

In a second use case, the driver monitoring sensor 18 may comprise a position sensor of a component of the driver seat. Using a detection result of this sensor, the detection result evaluation unit 20 determines the driver state DS "seat position normal".

Moreover, the driver monitoring sensor 18 may comprise an eye tracking system. Using the detection result of the eye tracking system, the detection result evaluation unit 20 determines the driver state DS "eyes directed to screen".

Furthermore, the driver monitoring sensor 18 may comprise a hand tracking system. Using the detection result of the hand tracking system, the detection result evaluation unit 20 determines the driver state DS "both hands free".

Based on these three driver states, the activity information generation unit may determine the activity DA "driver is working".

Moreover, using the driver classification unit 28, it may be found that a standard time for taking over control from the activity of working is 1 minute. However, for the current human driver the historic data may show that his personal average time for taking over control from the activity of working is 1,5 minutes.

Consequently, using the notification procedure generation unit 30, a notification time of 1,5 minutes may be determined. Since it has been determined that the driver is looking at a screen, the first notification type is determined to be "visual notification". This means that the notification is displayed on the screen.

In a third use case, the driver monitoring sensor 18 may comprise a position sensor of a component of the driver seat. Using a detection result of this sensor, the detection result evaluation unit 20 determines the driver state DS "seat position reclined".

Moreover, the driver monitoring sensor 18 may comprise an eye tracking system. Using the detection result of the eye tracking system, the detection result evaluation unit 20 determines the driver state DS "eyes closed".

Furthermore, the driver monitoring sensor 18 may comprise a hand tracking system. Using the detection result of the hand tracking system, the detection result evaluation unit 20 determines the driver state DS "both hands free".

Based on these three driver states, the activity information generation unit may determine the activity DA "driver is sleeping".

Moreover, using the driver classification unit 28, it may be found that a standard time for taking over control from the activity of sleeping is 4 minute. For the current human driver the historic data may show that his personal average time for taking over control from the activity of eating is also 4 minutes.

Consequently, using the notification procedure generation unit 30, a notification time of 4 minutes may be determined. The first notification type is determined to be "haptic notification". For example, a part of the driver seat is vibrating.

It is understood that for each of the above use cases, also a notification intensity, a second notification type and a notification escalation scheme can be determined. For example, in all use cases, the notification intensity is set to be "standard". The second notification type is the one out of a visual notification, an audio notification and a haptic notification that has not been used as the first notification type. The escalation scheme may comprise increasing the intensity to "high" and subsequently applying a third notification type being the remaining one of a visual notification, an audio notification and a haptic notification that has either been used as the first notification type nor as the second notification type.

Other variations to the disclosed examples can be understood and effected by those skilled in the art within the scope of the claims. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: autonomous driving system
- 12: data processing apparatus
- 14: first communication interface
- 16: second communication interface
- 18: driver monitoring sensor
- 20: detection result evaluation unit
- 22: machine learning unit
- 24: activity information generation unit
- 26: machine learning unit
- 28: driver classification unit
- 30: notification procedure generation unit
- 32: third communication interface
- 34: notification system
- 36: take-over assessment unit
- 38: fourth communication interface

- DA: driver activity information
- DC: reactivity classification information
- DS: driver state
- S1: method step
- S2: method step
- S2a: method step
- S2b: method step
- S2c: method step
- S3: method step
- S4: method step
- S5: method step
- S6: method step
- S7: method step

## Claims

1. A method for transitioning control of a vehicle from an autonomous driving system (10) to a human driver, comprising
- determining a notification procedure for prompting a human driver of the vehicle to take over control from the autonomous driving system (10) of the vehicle, wherein the notification procedure is at least defined by a notification starting time and a first notification type, comprising
- receiving a take-over request and an associated take-over time information (S1),
- determining a driver attribute describing the human driver (S2), and
- determining the notification starting time and the first notification type depending on the driver attribute (S3),
- triggering the execution of the determined notification procedure,
**characterised by** comprising
- assessing the quality of the take-over procedure by comparing a driving behavior of the human driver before the start of an autonomous driving mode and after the end of the autonomous driving mode.

2. The method according to claim 1, further comprising triggering at least one of a steering wheel and a driver seat to move into a driving position.

3. The method according to claim 1 or 2, further comprising saving input data, determination results and output data in a history storage unit.

4. The method according to any one of the preceding claims, wherein determining a notification procedure further comprises determining at least one of a notification intensity, a second notification type, and a notification escalation scheme depending on the driver attribute, wherein the notification procedure is defined by at least one of the notification intensity, the second notification type, and the notification escalation scheme.

5. The method according to any one of the preceding claims, wherein the first notification type and/or the second notification type comprise at least one of an audio notification, a visual notification and a haptic notification.

6. The method according to any one of the preceding claims, wherein determining a driver attribute comprises analyzing at least one detection result of at least one driver monitoring sensor (18) and deriving a corresponding driver state (DS), wherein the driver attribute is determined based on the driver state (DS) (S2a).

7. The method according to claim 6, wherein analyzing at least one detection result of at least one driver monitoring sensor (18) comprises applying a machine learning technique.

8. The method according to claim 6 or 7, wherein determining a driver attribute comprises aggregating a plurality of driver states (DS) and generating a driver activity information (DA), wherein the driver attribute is determined based on the driver activity information (DA) (S2b).

9. The method according to claim 8, wherein aggregating a plurality of driver states (DS) and generating a driver activity information (DA) comprises applying a machine learning technique.

10. The method according to any one of the preceding claims, wherein determining the driver attribute comprises receiving a reactivity classification information (DC) being attributed to the driver, wherein the driver attribute is determined based on the reactivity classification information (DC) (S2c).

11. The method according to any one of the preceding claims, wherein determining the driver attribute comprises analyzing historic driver behavior data and deducting a reactivity classification information (DC) being attributed to the driver, wherein the driver attribute is determined based on the reactivity classification information (DC).

12. A data processing apparatus (12) comprising means for carrying out the method of any one of the preceding claims.

13. An autonomous driving system (10) comprising a data processing apparatus (12) according to claim 12.

## Patentansprüche

1. Verfahren für den Übergang der Kontrolle eines Fahrzeugs von einem autonomen Fahrsystem (10) zu einem menschlichen Fahrer, umfassend
- Bestimmen eines Benachrichtigungsprocederes, um einen menschlichen Fahrer des Fahrzeugs aufzufordern, die Kontrolle von dem autonomen Fahrsystem (10) des Fahrzeugs zu übernehmen, wobei das Benachrichtigungsprocedere mindestens durch eine Benachrichtigungsstartzeit und einen ersten Benachrichtigungstyp definiert ist, umfassend:
- Empfangen einer Übernahmeanforderung und einer zugehörigen Übernahmezeitinformation (S1),
- Bestimmen eines Fahrerattributs, das den menschlichen Fahrer beschreibt (S2), und
- Bestimmen der Benachrichtigungsstartzeit und des ersten Benachrichtigungstyps in Abhängigkeit von dem Fahrerattribut (S3),
- Auslösen der Ausführung des bestimmten Benachrichtigungsprocederes,
**dadurch gekennzeichnet, dass** es umfasst:
- Beurteilen der Qualität des Übernahmeprocederes durch Vergleichen eines Fahrverhaltens des menschlichen Fahrers vor dem Start eines autonomen Fahrmodus und nach dem Ende des autonomen Fahrmodus.

2. Verfahren nach Anspruch 1, des Weiteren umfassend das Auslösen mindestens eines von einem Lenkrad und einem Fahrersitz zum Bewegen in eine Fahrposition.

3. Verfahren nach Anspruch 1 oder 2, des Weiteren umfassend das Speichern von Eingabedaten, Bestimmungsergebnissen und Ausgabedaten in einer Verlaufsspeichereinheit.

4. Verfahren nach einem der vorangehenden Ansprüche, wobei das Bestimmen eines Benachrichtigungsprocederes des Weiteren das Bestimmen mindestens eines von einer Benachrichtigungsintensität, einem zweiten Benachrichtigungstyp und einem Benachrichtigungseskalationsregime in Abhängigkeit von dem Fahrerattribut umfasst, wobei das Benachrichtigungsprocedere durch mindestens eines von der Benachrichtigungsintensität, dem zweiten Benachrichtigungstyp und dem Benachrichtigungseskalationsregime definiert wird.

5. Verfahren nach einem der vorangehenden Ansprüche, wobei der erste Benachrichtigungstyp und/oder der zweite Benachrichtigungstyp mindestens eines von einer akustischen Benachrichtigung, einer optischen Benachrichtigung und einer haptischen Benachrichtigung umfasst.

6. Verfahren nach einem der vorangehenden Ansprüche, wobei das Bestimmen eines Fahrerattributs das Analysieren mindestens eines Detektionsergebnisses mindestens eines Fahrerüberwachungssensors (18) und das Ableiten eines entsprechenden Fahrerzustands (DS) umfasst, wobei das Fahrerattribut auf der Grundlage des Fahrerzustands (DS) bestimmt wird (S2a).

7. Verfahren nach Anspruch 6, wobei das Analysieren mindestens eines Detektionsergebnisses mindestens eines Fahrerüberwachungssensors (18) das Anwenden einer Maschinenlerntechnik umfasst.

8. Verfahren nach Anspruch 6 oder 7, wobei das Bestimmen eines Fahrerattributs das Aggregieren mehrerer Fahrerzustände (DS) und das Generieren einer Fahreraktivitätsinformation (DA) umfasst, wobei das Fahrerattribut auf der Grundlage der Fahreraktivitätsinformation (DA) bestimmt wird (S2b).

9. Verfahren nach Anspruch 8, wobei das Aggregieren mehrerer Fahrerzustände (DS) und das Generieren einer Fahreraktivitätsinformation (DA) das Anwenden einer Maschinenlerntechnik umfassen.

10. Verfahren nach einem der vorangehenden Ansprüche, wobei das Bestimmen des Fahrerattributs das Empfangen einer Reaktivitätsklassifizierungsinformation (DC), die dem Fahrer zugeordnet ist, umfasst, wobei das Fahrerattribut auf der Grundlage der Reaktivitätsklassifizierungsinformation (DC) bestimmt wird (S2c) .

11. Verfahren nach einem der vorangehenden Ansprüche, wobei das Bestimmen des Fahrerattributs das Analysieren historischer Fahrerverhaltensdaten und das Ableiten einer Reaktivitätsklassifizierungsinformation (DC), die dem Fahrer zugeordnet ist, umfasst, wobei das Fahrerattribut auf der Grundlage der Reaktivitätsklassifizierungsinformation (DC) bestimmt wird.

12. Datenverarbeitungsvorrichtung (12), umfassend ein Mittel zum Ausführen des Verfahrens nach einem der vorangehenden Ansprüche.

13. Autonomes Fahrsystem (10), umfassend eine Datenverarbeitungsvorrichtung (12) nach Anspruch 12.

## Revendications

1. Procédé de transition de la commande d'un véhicule d'un système de conduite autonome (10) à un conducteur humain, comprenant
- la détermination d'une procédure de notification pour inviter un conducteur humain du véhicule à prendre le contrôle à partir du système de conduite autonome (10) du véhicule, dans lequel la procédure de notification est au moins définie par un temps de début de notification et un premier type de notification, comprenant
- la réception d'une demande de prise en charge et d'informations de temps de prise en charge associées (S1),
- la détermination d'un attribut de conducteur décrivant le conducteur humain (S2), et
- la détermination du temps de début de notification et du premier type de notification en fonction de l'attribut de conducteur (S3),
- le déclenchement de l'exécution de la procédure de notification déterminée,
**caractérisé par** comprenant
- l'évaluation de la qualité de la procédure de prise en charge en comparant un comportement de conduite du conducteur humain avant le début d'un mode de conduite autonome et après la fin du mode de conduite autonome.

2. Procédé selon la revendication 1, comprenant en outre le déclenchement d'au moins l'un parmi un volant de direction et un siège conducteur pour passer dans une position de conduite.

3. Procédé selon la revendication 1 ou 2, comprenant en outre la sauvegarde de données d'entrée, de résultats de détermination et des données de sortie dans une unité de stockage d'historique.

4. Procédé selon l'une quelconque des revendications précédentes, dans lequel la détermination d'une procédure de notification comprend en outre la détermination d'au moins l'un parmi une intensité de notification, un second type de notification, et un schéma d'escalade de notification en fonction de l'attribut de conducteur, dans lequel la procédure de notification est définie par au moins l'un parmi l'intensité de notification, le second type de notification, et/ou le schéma d'escalade de notification.

5. Procédé selon l'une quelconque des revendications précédentes, dans lequel le premier type de notification et/ou le second type de notification comprennent au moins l'une parmi une notification audio, une notification visuelle et une notification haptique.

6. Procédé selon l'une quelconque des revendications précédentes, dans lequel la détermination d'un attribut de conducteur comprend l'analyse d'au moins un résultat de détection d'au moins un capteur de surveillance de conducteur (18) et la dérivation d'un état de conducteur (DS) correspondant, dans lequel l'attribut de conducteur est déterminé sur la base de l'état de conducteur (DS) (S2a).

7. Procédé selon la revendication 6, dans lequel l'analyse d'au moins un résultat de détection d'au moins un capteur de surveillance de conducteur (18) comprend l'application d'une technique d'apprentissage automatique.

8. Procédé selon la revendication 6 ou 7, dans lequel la détermination d'un attribut de conducteur comprend l'agrégation d'une pluralité d'états de conducteur (DS) et la génération d'informations d'activité de conducteur (DA), dans lequel l'attribut de conducteur est déterminé sur la base des informations d'activité de conducteur (DA) (S2b).

9. Procédé selon la revendication 8, dans lequel l'agrégation d'une pluralité d'états de conducteur (DS) et la génération d'informations d'activité de conducteur (DA) comprennent l'application d'une technique d'apprentissage automatique.

10. Procédé selon l'une quelconque des revendications précédentes, dans lequel la détermination de l'attribut de conducteur comprend la réception d'informations de classification de réactivité (DC) attribuées au conducteur, dans lequel l'attribut de conducteur est déterminé sur la base des informations de classification de réactivité (DC) (S2c).

11. Procédé selon l'une quelconque des revendications précédentes, dans lequel la détermination de l'attribut de conducteur comprend l'analyse de données historiques de comportement de conducteur et la déduction d'informations de classification de réactivité (DC) attribuées au conducteur, dans lequel l'attribut de conducteur est déterminé sur la base des informations de classification de réactivité (DC)..

12. Appareil de traitement de données (12) comprenant des moyens pour mettre en œuvre le procédé selon l'une quelconque des revendications précédentes.

13. Système de conduite autonome (10) comprenant un appareil de traitement de données (12) selon la revendication 12.
